# EUROPÄISCHE PATENTSCHRIFT

(11) **EP 0 978 340 B1**
(45) Veröffentlichungstag und Bekanntmachung des Hinweises auf die Patenterteilung: **28.09.2005**
(21) Anmeldenummer: 99114296.9
(22) Anmeldetag: 30.07.1999
(51) Int. Cl.: B23D 37/10

(54) **Senkrecht-Räummaschine**
Vertical broaching machine
Machine de brochage verticale

(30) Priorität: 03.08.1998 DE 29813875 U
(43) Veröffentlichungstag der Anmeldung: 09.02.2000
(73) Patentinhaber: Karl Klink GmbH, 75223 Niefern-Öschelbronn (DE)
(72) Erfinder: Heel, Hans-Jürgen, 75223 Niefern-Öschelbronn (DE); Appich, Michael, 75417 Mühlacker (DE)
(74) Vertreter: Beetz & Partner

(56) Entgegenhaltungen:
- DE-A- 19 624 404
- US-A- 1 532 107
- US-A- 3 103 852
- PATENT ABSTRACTS OF JAPAN vol. 005, no. 093 (M-074), 17. Juni 1981 (1981-06-17) & JP 56 039815 A (TOYOTA MOTOR CORP), 15. April 1981 (1981-04-15)

## Beschreibung

Die Erfindung betrifft eine Senkrecht-Räummaschine mit einem formsteifen Maschinengestell, einem Räumtisch mit Aufnahmen zum Einspannen der Werkstücke, mit mindestens einem Räumwerkzeug und mit einer Steuereinheit.

Bei herkömmlichen Außen-Räummaschinen in Vertikalbauart sind die zu bearbeitenden Werkstücke auf einem Tisch aufgespannt, der fest mit dem vertikalen Maschinengestell verbunden ist. Die Räumwerkzeuge sind im Maschinengestell mit Hilfe von Linearantrieben, wie Druckmittelzylindern, Spindeltrieben oder dergleichen, längsverfahrbar und in oberen und unteren Halterungen lösbar eingespannt. Während des Räumvorgangs werden die Räumwerkzeuge an dem äußeren Teil des fest eingespannten Werkstücks entlanggeführt, so daß durch Eingriff der Räumzähne am Werkstück Material in der gewünschten Weise spanend abgetragen wird.

Aus der DE-PS 1 292 994 ist eine Senkrecht-Innen-Räummaschine bekannt, bei welcher der die Werkstücke in einer Vorlage aufnehmende Räumtisch als rahmenförmiger Hubschlitten ausgebildet ist, dessen obere Quertraverse mit den Kolbenstangen zweier hydraulischer Standzylinder verbunden ist. Durch Aktivierung dieser Zylinder führt der Räumschlitten gegenüber der ortsfesten Räumnadel den Arbeitshub aus. Die Räumnadel ist während der Räumvorgänge in oberen und unteren Haltern fixiert.

Ferner ist aus dem DE-GM 296 22 664 U1 (entsprechend DE-A-196 24 404) eine Senkrecht-Innen-Räummaschine bekannt, die eine Weiterentwicklung der vorstehend genannten Innen-Räummaschine darstellt und einen unterhalb des Hubtisches vertikal gesondert verfahrbaren Zubringerschlitten zur Halterung des unteren Endteils der Räumnadel aufweist. Auch bei dieser Maschine führt der an rückwärtigen Führungsschienen des Maschinengestells geführte Hubtisch die vertikalen Räumbewegungen aus, wobei als Antriebselemente Schraubenspindeln und drehangetriebene Spindelmuttern dienen. Zum Drall-Räumen kann der in einer oberen Quertraverse des Maschinengestells vorgesehene Werkzeughalter für die Räumnadeln mittels eines Hilfsantriebs drehangetrieben werden.

In den EP-A-0 763 394 bzw. JP-A-62-255011 ist eine Senkrecht-Räummaschine beschrieben, bei welcher die Räumvorgänge an zwei Werkstücken gleichzeitig durch Vertikalbewegungen eines im Maschinenständer seitlich geführten Räumtisches ausgeführt werden. Zwei parallele drehangetriebene Räumwerkzeuge sind mit ihren unteren Schäften im Ständerfuß und mit ihren oberen Schäften in einer vertikal verfahrbaren Quertraverse jeweils lösbar montiert. Ein seitlich am Ständer befestigtes Antriebsaggregat treibt den Räumtisch über einen Zahnstangentrieb an. Durch die seitliche Anordnung des Antriebsaggregates werden die Antriebskräfte außermittig in den Räumtisch eingeleitet, was Dreh- und Kippmomente verursacht, die von den entsprechend massiv auszulegenden Vertikalführungen aufgenommen werden müssen und eine technisch aufwendige Konstruktion bedingt.

Aus der DE-A-34 27 534 ist eine andere Senkrecht-Drückräummaschine zum Innenräumen von Werkstücken bekannt, die einen im Ständer fest installierten Werkstücktisch mit zwei Räumplätzen sowie zwei Räumwerkzeuge aufweist, deren obere und untere Schäfte in je einem Ober- bzw. Unterschlitten lösbar eingespannt sind. Eine Senkrecht-Innenräummaschine gleichen Typs mit feststehendem Werkstücktisch und vertikal von zwei Schlitten bewegten Räumnadeln ist in der DE-A-4 235 145 beschrieben.

Aufgabe der Erfindung ist es, eine universell einsetzbare Senkrecht-Räummaschine mit vertikal bewegtem Räumtisch zu schaffen, die bei relativ geringer Bauhöhe und hoher Steifigkeit besonders leistungsfähig ist.

Diese Aufgabe wird durch eine Senkrecht-Räummaschine gemäß Anspruch 1 gelöst.

Gemäß der Erfindung enthält die Senkrecht-Räummaschine ein formsteifes Maschinengestell, einen Räumtisch mit Aufnahmen zum Einspannen der Werkstücke, mindestens ein Räumwerkzeug und eine Steuereinheit, wobei erfindungsgemäß der Räumtisch in seitlichen Führungen des im Querschnitt C-förmigen Maschinengestells geführt ist und das bzw. die Räumwerkzeug(e) an der formsteifen Rückwand des Maschinengestells auswechselbar befestigt sind.

Die erfindungsgemäße Räummaschine bietet gegenüber konventionellen Maschinen den Vorteil einer ebenerdigen Bedienbarkeit und Verkettung, da weder eine Grubenaufstellung noch ein Podest erforderlich sind. Der C-förmige Querschnitt des von einer Quertraverse abgedeckten Maschinengestells führt zu einer extrem hohen Gesamtsteifigkeit der Maschine, was bekanntlich ein wesentliches Kriterium zur Erzielung hoher Spanleistungen und geringer Bearbeitungstoleranzen ist. Die Anordnung der Vertikalführungen für den Räumtisch an den gegenüberliegenden Innenseiten der steifen Seitenwände des Maschinengestells ermöglicht exakte Tischbewegungen auch bei höchsten Belastungen und betriebstechnisch günstige Abmessungen des Räumtisches.

Ein besonderer Vorzug wird durch die lösbare Anordnung der Räumwerkzeuge an der Rückwand des Maschinengestells erreicht. Eines oder auch mehrere Räumwerkzeuge können an einem gemeinsamen Halter, z.B. in Form einer steifen Platte, vormontiert sein, wobei dieser Halter dann an der vorgesehenen Stelle der Rückwand durch geeignete Befestigungsmittel angebaut wird. Der Anbau der Halter an der Rückwand kann von der Vorderseite der Maschine aus erfolgen, wobei in diesem Fall an der Rückwand vorstehende Fixierelemente, wie Zapfen, Profile oder dergleichen, vorgesehen sein sollten, an denen der vorzugsweise plattenförmige Halter befestigt wird. In vielen Fällen ist jedoch der Einbau des mit vormontierten Werkzeugen versehenen Halters von der Maschinenrückseite aus besonders zweckmäßig, weil manuelle Durchgriffe durch den Arbeitsraum vermieden werden. Zu diesem Zweck ist in der Rückwand des Maschinengestells eine Öffnung ausgebildet, die zur Aufnahme der den Halter bildenden Tragplatte dient. Die Dicke und Form der Halter bzw. der Tragplatte wird so gewählt, daß sich nach dem Einbau des Halters die an seiner Vorderseite vormontierten Werkzeuge genau in ihrer Arbeitsposition befinden. Obgleich nicht zwingend erforderlich, sollte die Form der Tragplatte der Form der Öffnung in der Rückwand entsprechen, damit ein Paßsitz erzielt werden kann. Die Fixierung der Tragplatte bzw. des Halters erfolgt durch geeignete Befestigungsmittel von der Rückseite aus, z.B. durch Schraubbolzen.

Neben dem vereinfachten Werkzeugwechseln ergeben sich als weitere Vorteile eine verbesserte Zugänglichkeit zu den Spannvorrichtungen der Werkstücke sowie günstige Anbaumöglichkeiten der Kontroll- und Steuereinrichtungen an dem Maschinengestell. Da das Räumwerkzeug direkt in bzw. an dem formsteifen Maschinengestell fixiert ist und das zu bearbeitende Werkstück an dem formsteifen Räumtisch fest eingespannt ist, werden Vibrationen und Schwingungen während des Räumvorgangs minimiert und erhöhte Bearbeitungsgenauigkeiten gewährleistet. Eine besonders hohe Gesamtsteifigkeit der Räummaschine wird durch die Ausbildung des Maschinengestells als Rahmen mit vorzugsweise C-förmigem Querschnitt erzielt, wobei das Maschinengestell eine obere versteifende Quertraverse aufweist, an der die Antriebseinheiten für die Fahrbewegungen des Räumtisches montiert werden können. Diese Antriebseinheiten können Druckmittelzylinder, Spindeltriebe oder auch andere Linearmotoren sein.

Eine Besonderheit der erfindungsgemäßen Senkrecht-Räummaschine liegt in ihrer konzeptionellen Eignung zum Innen-und zum Außenräumen, wobei zur Umstellung einer Betriebsart auf die andere nur einfache technische Maßnahmen vorzunehmen sind, die entweder vom Anwender oder auch vom Hersteller durchgeführt werden können. Dieser Maschinentyp kann auch als reine Innen-Räummaschine ausgebildet sein, wobei in diesem Fall die Mittel zur lösbaren Befestigung der Außenräumwerkzeuge inaktiv bleiben. Die vorstehend beschriebenen Vorzüge, wie hohe Bearbeitungsgenauigkeit und hohe Leistung durch optimierte Steifigkeit, bleiben auch nach einer Umrüstung der Maschine erhalten.

Bei einer zum Innenräumen umgerüsteten oder konzipierten Maschinenausführung wird durch die Anordnung des Zubringerschlittens oberhalb des Räumtisches der Bedienungskomfort gegenüber dem Stand der Technik erheblich verbessert, und zwar bei gleichzeitiger konstruktiver Vereinfachung und hoher Bearbeitungsgenauigkeit aufgrund der hohen Formsteifigkeit der am Bearbeitungsvorgang beteiligten Bauteile und des Führungssystems.

Weitere Vorzüge und Besonderheiten der erfindungsgemäßen Senkrecht-Räummaschine ergeben sich aus der folgenden Beschreibung von Ausführungsbeispielen anhand der Zeichnungen. Es zeigen:
- Fig. 1: eine Senkrecht-Außen-Räummaschine in schematischer Vorderansicht;
- Fig. 2: die Außen-Räummaschine nach Fig. 1 im Querschnitt II-II;
- Fig. 3: eine Variante der Außen-Räummaschine nach Fig. 1 im Querschnitt;
- Fig. 4 5,: die Außen-Räummaschine nach Fig. 1 in verschiedenen Betriebsstellungen;
- Fig. 6, 7: eine Senkrecht-Räummaschine zum Außen- und Innenräumen in schematischer Vorderansicht und im Querschnitt VII-VII in Fig. 6.

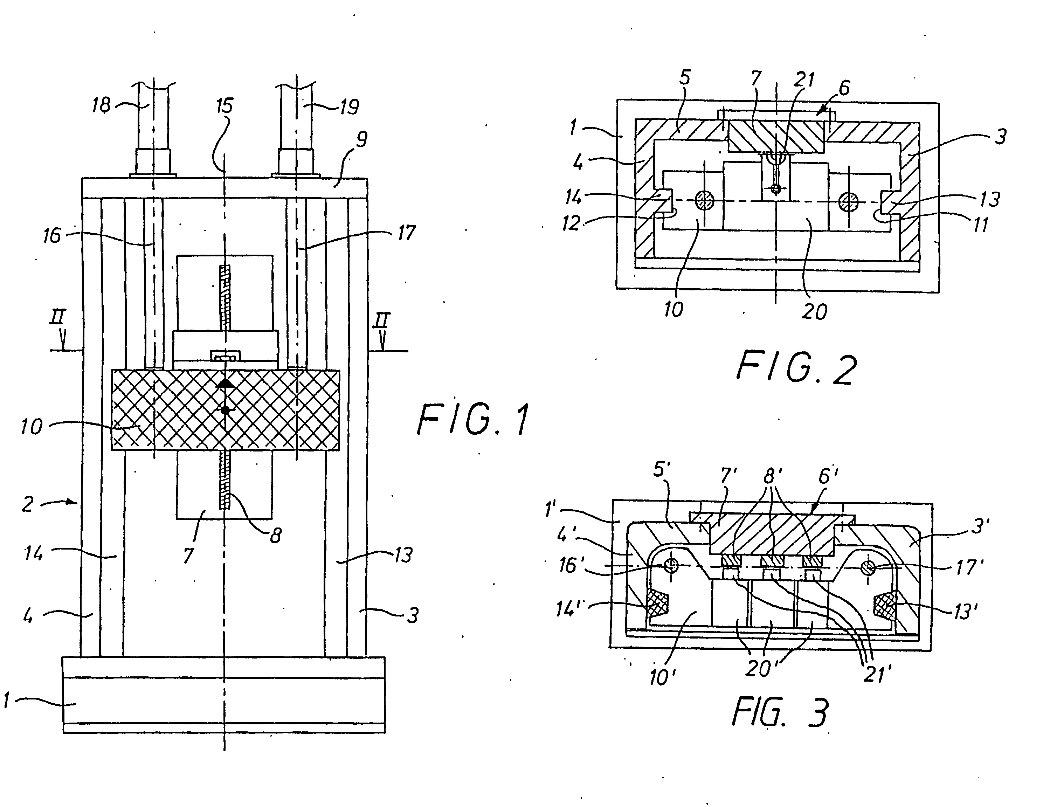

Die in den Fig. 1 und 2 dargestellte Senkrecht-Außen-Räummaschine enthält ein auf einer Basis 1 befestigtes formsteifes Maschinengestell 2, das gemäß Fig. 2 als massiver Rahmen von C-förmigem Querschnitt mit zwei Seitenwänden 3, 4 und einer damit verbundenen Rückwand 5 ausgebildet ist. In dieser Rückwand 5 ist ein Werkzeughalter 6 lösbar befestigt, dessen langgestreckte massive Tragplatte 7 einen Ausschnitt in der Rückwand 5 ggf. im Paßsitz bzw. im Formschluß durchgreift. An der vorderen Stirnfläche dieser Tragplatte 7 ist ein Räumwerkzeug 8 befestigt. Der Ein- und Ausbau des Werkzeughalters kann zweckmäßig von der Rückseite des Maschinengestells 2 erfolgen.

In dem Maschinengestell 2 ist ein hochstabiler Räumtisch 10 vertikal verfahrbar vorgesehen, der an seinen Seiten Ausschnitte 11, 12 aufweist, in die am Maschinengestell 2 ausgebildete Führungsschienen 13, 14 eingreifen. Der Räumtisch 10 ist an den unteren Enden von zwei symmetrisch zur Mittelachse 15 im Maschinengestell 2 angeordneten Stangen 16, 17 befestigt, welche eine obere formsteife Quertraverse 9 des Maschinengestells durchragen und mit den Kolben zweier hier als Druckmittelzylinder 18, 19 ausgebildeter Linearantriebe verbunden sind. Diese Druckmittelzylinder sind an der oberen Quertraverse 9 befestigt. An dem Räumtisch 10 ist ein Werkstückhalter 20 montiert, in den ein Werkstück 21 in bekannter Weise lösbar eingespannt ist, dessen zu bearbeitender Teil seitlich über den Räumtisch 10 vorsteht.

Die in Fig. 3 dargestellte Ausführung entspricht im wesentlichen der Räummaschine nach Fig. 1 und 2, wobei die gleichen mit einem Indexstrich versehenen Bezugszeichen für entsprechende Bauteile verwendet werden. Im Unterschied zu der Räummaschine nach Fig. 1 und 2 liegen bei der Variante nach Fig. 3 die Mittelachsen der Stangen 16, 17 in der strichpunktiert eingezeichneten vertikalen Ebene des Werkzeugangriffs an den Werkstücken 21'. Ferner sind bei dieser Ausführung drei Räumwerkzeuge 8' nebeneinander an der massiven Tragplatte 7' des Werkzeughalters 6' montiert, die zur gleichzeitigen Bearbeitung von drei nebeneinander auf dem Räumtisch 20' angeordneten Werkstücken 21' dienen. Neben den in den Fig. 2 und 3 dargestellten Relativlagen der Mittelachsen der Stangen 16, 17 bzw. 16', 17' und der Vertikalebene des Werkzeugsangriffs sind auch andere Relativlagen dieser Bauteile möglich. Die Führungsschienen 13', 14' haben bei der Ausführung nach Fig. 3 einen trapezförmigen Querschnitt und sind als eigenständig ausgeführte Bauelemente an den Seitenwänden 3', 4' des Maschinengestells z.B. durch Schweißen befestigt.

Die Funktion der vorstehend beschriebenen Senkrecht-Außen-Räummaschinen ist folgende.

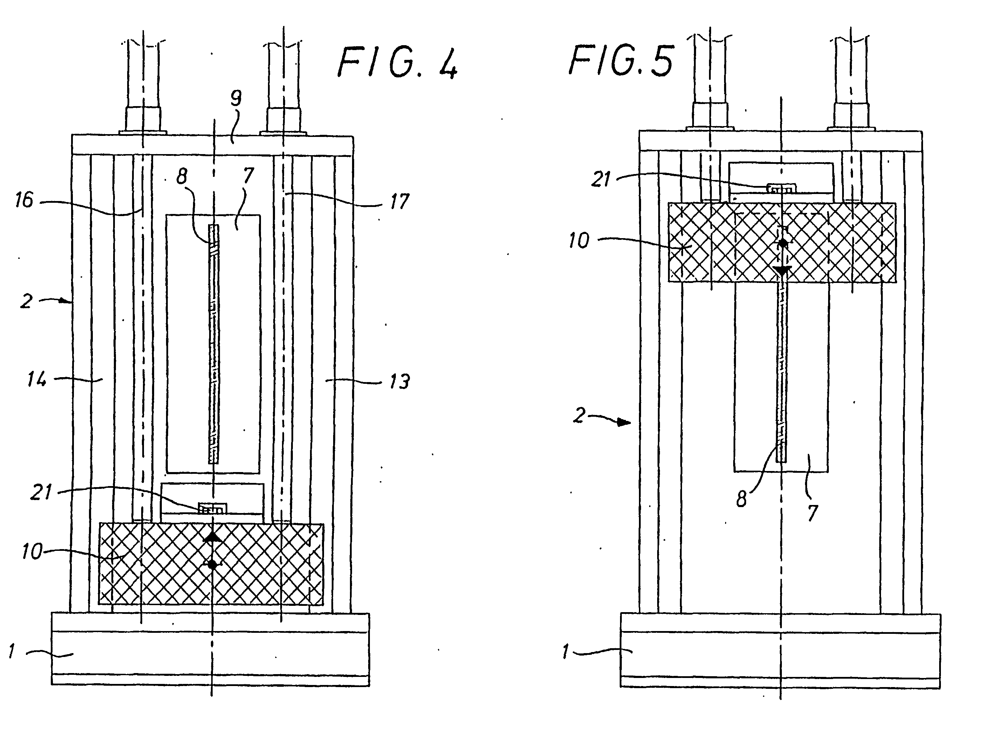

Zu Beginn eines Bearbeitungsvorgangs wird ein Werkstück 21 im Werkstückhalter 20 fest eingespannt, wobei sich der Räumtisch 10 in der in Fig. 4 dargestellten unteren Position befindet. Beim anschließenden Räumvorgang wird der Räumtisch 10 durch Betätigung der Druckmittelzylinder 18, 19 am Werkzeug 8 vertikal nach aufwärts gezogen, wie dies in Fig. 1 dargestellt ist. Wenn der Räumtisch 10 seine obere Endposition gemäß Fig. 5 erreicht hat, in welcher das Werkstück 21 und das Räumwerkzeug 8 außer Eingriff sind, wird das bearbeitete Werkstück 21 durch Lösen der Spanneinrichtung aus der Bearbeitungszone entfernt und der Räumtisch 10 in die Ausgangslage nach Fig. 4 nach unten verfahren, in der eine erneute Werkstückbeladung vorgenommen werden kann.

Die dargestellte Maschine ist neben dem vorstehend beschriebenen Räumvorgang, bei dem die Bearbeitung während des Aufwärtshubs des Räumschlittens erfolgt, auch zu einer Räumart geeignet, bei welcher die Stangen 16, 17 den in seiner oberen Endstellung gemäß Fig. 5 mit dem Werkstück 21 beladenen Räumtisch 10 nach abwärts drücken. In diesem Fall werden die bearbeiteten Werkstücke in der unteren Endstellung gemäß Fig. 4 ggf. durch automatisierte Ladeeinrichtungen entnommen.

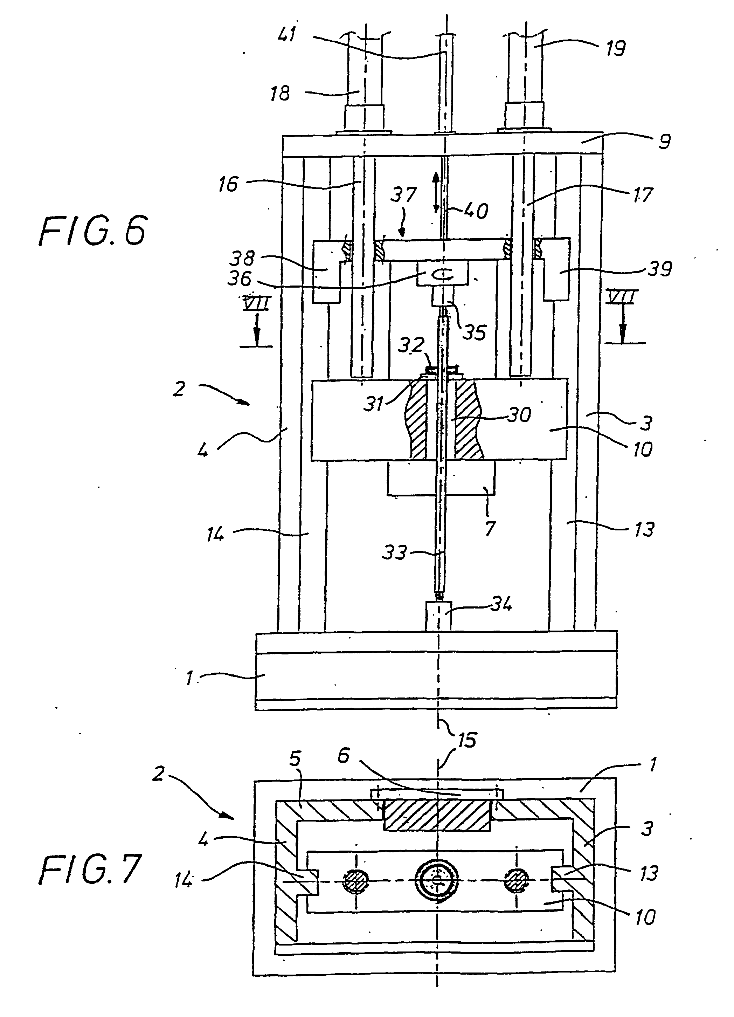

Die in den Fig. 6 und 7 schematisch dargestellte Senkrecht-Räummaschine ist vorzugsweise zum Innenräumen geeignet, kann aber auch zum Außenräumen in der vorstehend beschriebenen Weise eingesetzt werden, da das Grundkonzept dieser Maschine dem der Ausführungen nach Fig. 1 bis 5 entspricht. Gleiche bzw. gleichartige Bauteile sind in den Fig. 6 und 7 mit den entsprechenden Bezugszeichen wie in Fig. 1, 2 bezeichnet.

Auch bei der Räummaschine nach Fig. 6, 7 hat das Maschinengestell 2 einen C-förmigen Querschnitt, bestehend aus den beiden Seitenwänden 3, 4 mit je einer innenseitigen Führung 13, 14 und aus der formsteifen Rückwand 5, in welcher ein Ausschnitt zur lösbaren Montage des Werkzeughalters 6 ausgebildet ist. Der formsteife Werkstücktisch 10 hängt an zwei Stangen 16, 17, die über die an der oberen Quertraverse 9 angeordneten Linearantriebe 18, 19 bewegt werden.

Der durch die Linearantriebe 18, 19 und die Stangen 16, 17 vertikal bewegbare Räumtisch 10 weist bei dieser Ausführung eine zentrale Bohrung 30 sowie einen zentral angeordneten Werkstückhalter 31 mit eingespanntem Werkstück 32 auf. Eine Räumnadel 33 ist in einem auf der Basis 1 angeordneten unteren Werkzeughalter 34 und mit ihrem oberen Ende in einem oberen Werkzeughalter 35 lösbar gehalten und durchragt in der Maschinenachse 15 die Bohrung 30 im Räumtisch 10. Wie aus Fig. 6 ersichtlich, ist der obere Werkzeughalter 35 über einen Drehantrieb 36 an einem schlittenförmigen Werkzeugzubringer 37 montiert, der in Seitenansicht U-förmig ausgebildet ist und mit seinen beiden Schenkeln 38, 39 an den gestellfesten Führungsschienen 13, 14 geführt ist. Am zentralen Querhaupt dieses Zubringers 37 ist die Stange 40 eines auf dem Gestellquerhaupt 9 angeordneten Hilfsantriebs 41 befestigt, so daß der Werkzeugzubringer in Richtung des Doppelpfeils durch Aktivierung dieses Hilfsantriebs 41 eigenständig vertikal verfahren werden kann. Die seitlichen Führungsschenkel 38, 39 gewährleisten eine exakte Führung des Werkzeugzubringers 37 in den Führungen 13, 14 des Machinengestells.

Wenn die vorstehend beschriebene Senkrecht-Räummaschine zum Außenräumen eingesetzt wird, wird der Werkzeughalter 6 mit mindestens einem Räumwerkzeug besetzt und der Räumtisch 10 zur Aufnahme der entsprechenden Werkstücke umgerüstet. Der dann inaktive Werkzeugzubringer 37 ist in seiner obersten Endstellung unmittelbar unter dem Querhaupt 9 des Gestells festgelegt. Nach diesen Umrüstarbeiten kann in gleicher Weise wie bei der vorstehend beschriebenen Maschine nach Fig. 1 gearbeitet werden.

Ferner kann beim Innenräumen mit Drall gearbeitet werden, wobei in diesem Fall der Drehantrieb 36 aktiviert wird und die Räumnadel 33 über ihren oberen Halter 35 in eine vorgegebene Drehbewegung versetzt wird.

Die Erfindung ist nicht auf die dargestellten Ausführungsbeispiele beschränkt. So können beispielsweise statt des dargestellten einzigen Räumwerkzeugs 8 an der Tragplatte 7 mehrere Räumwerkzeuge 8' angeordnet werden, wobei dann auch die Werkstückaufnahme des Räumtisches zum Spannen von mehreren Werkstücken ausgelegt ist. Ferner kann auch das Maschinengestell eine andere ausreichend steife Konfiguration mit zwei Seitenwänden und einer Rückwand haben und statt der dargestellten Druckmittelzylinder 18, 19 können andersartige Linearmotoren für die Hubbewegung des Räumschlittens eingesetzt werden. Es ist auch möglich, die Antriebseinheiten für die Hub- bzw. Arbeitsbewegungen des Räumtisches 10 als Linearmotoren unterhalb des Räumtisches, d.h. zwischen der Basis 1 des Gestells 2 und dem Räumtisch 10 anzuordnen. In diesem Fall werden als Linearmotoren vorzugsweise zwei symmetrisch zur Mittelachse angeordnete Teleskop-ZylinderEinheiten eingesetzt.

Ferner sind statt der Gleitführungen auch andere lineare Führungssysteme für den Räumtisch 10 bzw. den Werkzeugzubringer 37 möglich. Schließlich können an der Rückwand und ggf. auch an den Seitenwänden des Maschinengestells weitere Aggregate montiert werden.

## Patentansprüche

1. Senkrecht-Räummaschine, bestehend aus
- einem formsteifen Maschinengestell (2),
- einem motorisch an Vertikal-Führungen verfahrbaren Räumtisch (10) mit Werkstückhaltern (20) zum Einspannen der Werkstücke (21),
- mindestens einem beim Räumen fixierten Räumwerkzeug (8, 8') und
- einer Steuereinrichtung für die Bearbeitungsoperationen,
**dadurch gekennzeichnet, daß**
- das Maschinengestell (2) einen C-förmigen Querschnitt hat,
- der Räumtisch (10) in seitlichen Führungen (11 bis 14) im Maschinengestell (2) geführt ist und
- das bzw. die Räumwerkzeuge (8, 8') an der formsteifen Rückwand (5) des Maschinengestells (2) auswechselbar montierbar sind.

2. Räummaschine nach Anspruch 1, **dadurch gekennzeichnet, daß** das Maschinengestell (2) eine Rahmenkonstruktion ist, an deren oberer Quertraverse (9) Antriebseinheiten (18, 19) für die Fahrbewegungen des Räumtisches (10) montiert sind.

3. Räummaschine nach Anspruch 1, **dadurch gekennzeichnet, daß** auf der Basis (1) des Maschinengestells Antriebseinheiten für die Fahrbewegungen des Räumtisches (10) angeordnet sind, die an der Unterseite des Räumtisches (10) angreifen und vorzugsweise als TeleskopZylinder ausgebildet sind.

4. Räummaschine nach einem der Ansprüche 1 bis 3, **dadurch gekennzeichnet, daß** der Räumtisch (10) seitliche Ausschnitte (11, 12) aufweist, in welche gestellfeste Führungsschienen (13, 14) eingreifen.

5. Räummaschine nach Anspruch 4, **dadurch gekennzeichnet, daß** die Führungsschienen (13, 14) an den beiden Seitenwänden (3, 4) des Maschinengestells (2) befestigt sind.

6. Räummaschine nach einem der Ansprüche 1 bis 5, **dadurch gekennzeichnet, daß** die Werkstückhalter (20) auf der Oberseite und/oder an der vertikalen Rückseite des Räumtisches (10) angeordnet sind.

7. Räummaschine nach einem der Ansprüche 1 bis 6, **dadurch gekennzeichnet, daß** die vertikale Verbindungsebene der Angriffspunkte der Stangen (16, 17) der Antriebseinheiten (18, 19) am Räumtisch (10) in etwa in der vertikalen Angriffsebene der Räumwerkzeuge (8) am Werkstück (21) liegt.

8. Räummaschine nach einem der Ansprüche 1 bis 7, **dadurch gekennzeichnet, daß** die Räumwerkzeuge (8, 8') an einer massiven Tragplatte (7) montiert sind, welche an der Rückwand (5) des Maschinengestells (2) lösbar befestigt ist.

9. Räummaschine nach Anspruch 8, **dadurch gekennzeichnet, daß** die Tragplatte (7) in einen Ausschnitt der Rückwand (5) des Maschinengestells (2) eingepaßt und von deren Rückseite aus montierbar ist.

10. Senkrecht-Räummaschine nach einem der Ansprüche 1 bis 9, **dadurch gekennzeichnet, daß** zum Innenräumen der Räumtisch (10) mindestens eine Durchgangsbohrung (30) mit einer koaxialen Werkstückaufnahme (31) aufweist und daß ein in den seitlichen Vertikalführungen (13, 14) des Maschinengestells (2) motorisch verfahrbarer schlittenförmiger Werkzeugzubringer (37) oberhalb des Räumtisches (10) angeordnet ist, der eine Halterung (35) zum lösbaren Fixieren des oberen Endteils des Innen-Räumwerkzeuges (33) aufweist.

11. Räummaschine nach Anspruch 10, **dadurch gekennzeichnet, daß** eine Antriebseinheit (41) für den Werkzeugzubringer (37) an der oberen Quertraverse (9) des Maschinengestells (2) montiert ist.

12. Räummaschine nach Anspruch 10 oder 11, **dadurch gekennzeichnet, daß** zum Drallräumen am Werkzeugzubringer (37) ein Drehantrieb (36) angeordnet ist, der die Räumnadel (33) in Drehung versetzt.

## Claims

1. Vertical broaching machine consisting of
- a dimensionally stable machine stand (2),
- a broaching table (10) movable along vertical guides by means of a motor and including work piece mounts (20) for clamping the work pieces (21),
- at least one broaching tool (8, 8') fixed during the broaching process, and
- a control unit for the machining operations,
**characterised in that**
- the machine stand (2) has a C-shaped cross section,
- the broaching table (10) is guided in lateral guides (11 to 14) in the machine stand (2), and
- the broaching tool(s) (8, 8') is (are) are replaceably mounted on the dimensionally stable rear wall (5) of the machine stand (2).

2. Broaching machine according to claim 1, **characterised in that** the machine stand (2) is a frame construction, on the upper transverse rod (9) of which driving units (18, 19) for the travelling motion of the broaching table (10) are mounted.

3. Broaching machine according to claim 1, **characterised in that** driving units for the travelling motion of the broaching table (10) are disposed on the base (1) of the machine stand, said driving units engaging on the lower surface of the broaching table (10) and being preferably formed as telescopic cylinders.

4. Broaching machine according to one of claims 1 to 3, **characterised in that** the broaching table (10) has lateral cut-outs (11, 12) into which guiding rails (13, 14) engage which are fixed to the stand.

5. Broaching machine according to claim 4, **characterised in that** the guiding rails (13, 14) are fixed to the two side walls (3, 4) of the machine stand (2).

6. Broaching machine according to one of claims 1 to 5, **characterised in that** the work piece mounts (20) are disposed on the upper surface and/or the vertical rear side of the broaching table (10).

7. Broaching machine according to one of claims 1 to 6, **characterised in that** the vertical connection plane of the points of attack of the rods (16, 17) of the driving units (18, 19) on the broaching table (10) is disposed approximately in the vertical plane of attack of the broaching tools (8) on the work piece (21).

8. Broaching machine according to one of claims 1 to 7, **characterised in that** the broaching tools (8, 8') are mounted on a massive carrier plate (7) which is detachably fixed to the rear wall (5) of the machine stand (2).

9. Broaching machine according to claim 8, **characterised in that** the carrier plate (7) can be fitted into a cut-out in the rear wall (5) of the machine stand (2) and mounted from its rear side.

10. Vertical broaching machine according to one of claims 1 to 9, **characterised in that** the broaching table (10) is provided with at least one through bore (30) including a coaxial work piece accommodation (31) for interior broaching, and **in that** a slide-shaped tool feeder (37) movable by means of a motor in the lateral vertical guides (13, 14) of the machine stand (2) is disposed above the broaching table (10), said tool feeder (37) comprising a mount (35) for detachably fixing the upper end portion of the interior broaching tool (33).

11. Broaching machine according to claim 10, **characterised in that** a driving unit (41) for the tool feeder (37) is mounted on the upper transverse bar (9) of the machine stand (2).

12. Broaching machine according to claim 10 or 11, **characterised in that** a rotary drive (36) inducing a rotation of the broaching needle (33) is disposed on the tool feeder (37) for torsion broaching.

## Revendications

1. Machine de brochage verticale comportant
- un bâti de machine (2) à rigidité propre,
- une table de brochage (10) motorisée déplaçable dans des glissières de guidage verticales, avec des dispositifs de fixation de pièces (20) pour serrer les pièces à usiner (21),
- au moins un outil de brochage (8, 8') fixé lors du brochage et
- un dispositif de commande pour les opérations d'usinage,
**caractérisée en ce que**
- le bâti de machine (2) a une coupe transversale en forme de C,
- la table de brochage (10) est guidée dans des glissières de guidage latérales (11 à 14) dans le bâti de machine (2) et
- le et/ou les outils de brochage (8, 8') peuvent être montés de manière amovible sur la paroi arrière (5) à rigidité propre du bâti de machine (2).

2. Machine de brochage selon la revendication 1, **caractérisée en ce que** le bâti de machine (2) est une structure en forme de portique, sur la traverse (9) de laquelle sont montées des unités d'entraînements (18, 19) pour les mouvements de translation de la table de brochage (10).

3. Machine de brochage selon la revendication 1, **caractérisée en ce que** des unités d'entraînement sont disposées sur la base (1) du bâti de machine pour les mouvements de translation de la table de brochage (10), lesquelles agissent à la face inférieure de la table de brochage (10) et sont de préférence réalisées comme vérins télescopiques.

4. Machine de brochage selon l'une des revendications 1 à 3, **caractérisée en ce que** la table de brochage (10) comporte des découpes latérales (11, 12) dans lesquelles s'engagent des glissières de guidage (13, 14) fixées au bâti.

5. Machine de brochage selon la revendication 4, **caractérisée en ce que** les glissières de guidages (13, 14) sont fixées aux deux parois latérales (3, 4) du bâti de machine (2).

6. Machine de brochage selon l'une des revendications 1 à 5, **caractérisée en ce que** les dispositifs de fixation de pièces (20) sont disposés sur le dessus et/ou sur la face arrière verticale de la table de brochage (10).

7. Machine de brochage selon l'une des revendications 1 à 6, **caractérisée en ce que** le plan vertical de jonction des points d'application des tiges (16, 17) des unités d'entraînement (18, 19) à la table de brochage (10) est situé en quelque sorte dans le plan vertical d'application des outils de brochage (8) à la pièce (21).

8. Machine de brochage selon l'une des revendications 1 à 7, **caractérisée en ce que** les outils de brochage (8, 8') sont montés sur une plaque massive de support (7), laquelle est fixée de manière amovible à la paroi arrière (5) du bâti de machine (2).

9. Machine de brochage selon la revendication 8, **caractérisée en ce que** la plaque de support (7) est encastrée dans une découpe de la paroi arrière (5) du bâti de machine (2) et peut être montée depuis sa face arrière.

10. Machine de brochage vertical selon l'une des revendications 1 à 9, **caractérisée en ce que** pour le brochage intérieur, la table de brochage (10) comporte au moins un alésage de passage (30) avec une fixation coaxiale de pièce (31) et **en ce qu'**un dispositif d'amenée d'outil (37) en forme de chariot déplaçable de manière motorisée dans les glissières de guidage verticales (13, 14) du bâti de machine (2) est disposé au-dessus de la table de brochage (10), laquelle comporte un support (35) pour fixer de manière amovible la partie terminale de l'outil de brochage intérieur (33).

11. Machine de brochage selon la revendication 10, **caractérisée en ce qu'**une unité d'entraînement (41) est montée pour le dispositif d'amenée d'outil (37) sur la traverse supérieure (9) du bâti de machine (2).

12. Machine de brochage selon la revendication 10 ou 11, **caractérisée en ce que** pour le rainurage hélicoïdal un entraînement rotatif (36) est disposé au dispositif d'amenée d'outil (37), lequel fait tourner la broche intérieure (33).
